Europäisches Patentamt

European Patent Office

Office européen des brevets

(19)

(11) Numéro de publication : **0 168 295**
**B1**

(12)                    **FASCICULE DE BREVET EUROPÉEN**

(45) Date de publication du fascicule du brevet :
17.08.88

(51) Int. Cl.⁴ : **C 04 B 35/10, C 04 B 35/65**

(21) Numéro de dépôt : **85401151.7**

(22) Date de dépôt : **11.06.85**

(54) Nouveaux réfractaires à haute teneur en alumine et leur procédé d'obtention.

(30) Priorité : **13.06.84 FR 8409221**

(43) Date de publication de la demande :
**15.01.86 Bulletin 86/03**

(45) Mention de la délivrance du brevet :
**17.08.88 Bulletin 88/33**

(84) Etats contractants désignés :
**BE DE FR GB IT NL SE**

(56) Documents cités :
**GB-A- 1 100 865**
**GB-A- 2 040 911**
**GB-A- 2 075 965**
**US-A- 2 599 185**
**US-A- 2 922 213**
**CHEMICAL ABSTRACTS, vol. 73, no. 4, juillet 1970, page 229, no. 18067w, Columbus, Ohio, US; J.L. HENRY et al.: "The system aluminum carbide-aluminum nitride-aluminum oxide"**

(73) Titulaire : **SAVOIE REFRACTAIRES**
**10 rue de l'Industrie B.P. 1**
**F-69631 Venissieux Cedex (FR)**

(72) Inventeur : **Kiehl, Jean-Pierre**
**15 rue de la Balme·**
**F-69003 Lyon (FR)**
Inventeur : **Kuster, Daniel**
**30 bis, rue des Granges**
**F-69005 Lyon (FR)**

(74) Mandataire : **Phélip, Bruno et al**
**c/o Cabinet Harlé & Phélip 21, rue de la Rochefoucauld**
**F-75009 Paris (FR)**

EP 0 168 295 B1

# 0 168 295

## Description

La présente invention est relative à de nouveaux réfractaires à très haute teneur en alumine.

Les réfractaires à plus de 95 % d'alumine sont connus depuis de nombreuses années déjà dans l'industrie réfractaire et sont utilisés en tonnages importants dans certains réacteurs de pétrochimie, tels que les réacteurs secondaires d'ammoniac, ou les réacteurs de synthèse de méthanol.

Malgré un point de fusion élevé, supérieur à 2 000 °C, leur température limite d'emploi reste néanmoins inférieure à 1 500 °C. Utilisés au-delà de cette température on observe souvent un écaillage rapide des briques voire même un écrasement de celles-ci sous le seul poids des pressions exercées par la dilatation des maçonneries. Ce défaut tient au fait qu'au-delà de 1 500 °C, les caractéristiques mécaniques s'effrondrent, par exemple la résistance à la compression chute brutalement de 1 000 bars à des valeurs de quelques bars aussi bien en atmosphère oxydante qu'en atmosphère réductrice.

Pour palier ces défauts, on lie le corindon avec un liant de mullite, ce qui permet d'étendre leur domaine d'application jusqu'à 1 700/1 750 °C en atmosphère oxydante.

En atmosphère réductrice, par contre, cette addition de mullite n'est pas possible car la silice, réduite, est volatilisée en SiO, ce qui rend les briques de corindon spongieuses et friables. On peut alors utiliser des réfractaires à base de carbone mais dans l'évolution des techniques actuelles, on rencontre de plus en plus d'appareils industriels travaillant au-delà de 1 500 °C en atmosphère réductrice, en donnant souvent comme sous-produits des laitiers riches en composés facilement réductibles, tels que : $SiO_2$, $Fe_2O_3$, ou $TiO_2$, de sorte que le carbone pur comme produit réfractaire ne donne guère satisfaction non plus.

Par ailleurs, la porosité ouverte de tous ces réfractaires ne descend pas pour les meilleures en dessous de 15 %, à moins d'y ajouter une phase fusible, ce qui a beaucoup d'autres inconvénients, le plus important étant d'abaisser la réfractarité.

Pour le moment, le problème est partiellement résolu en utilisant comme liant du graphite, du nitrure de silicium ou du sialon. Le sialon est une solution solide d'alumine dans du nitrure de silicium, de formule globale :

$$Si_{(6-z)} Al_z N_{8-z} O_z \text{ où } z = 1 \text{ à } 4.$$

Les corindons-graphites atteignent des modules de rupture de 80 à 100 kg/cm² à 1 500 °C, ce qui est nettement meilleur que ceux du corindon pur, mais insuffisants encore pour certaines applications comportant une érosion mécanique : lit de coke, de minerais, etc.

La porosité de ces réfractaires de corindon-graphite peut être maintenue à moins de 15 %, mais il s'agit plus d'un bouchage de pores que d'une réaction chimique entre le corindon et le graphite. Ils restent, par ailleurs, très sensibles à l'oxydation.

Les réfractaires de corindon-nitrure de silicium ou corindon-sialon atteignent des modules de rupture à chaud supérieurs à 200 kg/cm² à 1 500 °C, mais en s'oxydant ils donnent de la silice qui réagit facilement avec les oxydes de fer et autres constituants des laitiers en formant des verres fusibles.

En outre, le liant nitrure ou sialon a tendance à se décomposer thermiquement au-delà de 1 600/1 650 °C, ce qui libère également de la silice très réactive. De ce fait, ces réfractaires sont assez sensibles à la corrosion aux laitiers sidérurgiques, et aux cendres de charbons au-delà de ces températures. Ces réfractaires non plus ne peuvent pas être obtenus économiquement à faible porosité.

Il existe donc un besoin non satisfait de réfractaires stables à haute température en atmosphère réductrice, à forte résistance mécanique et faible porosité, non susceptible de dégager de la silice.

Le but de l'invention est de fournir de tels réfractaires, et plus précisément des réfractaires à point de fusion supérieur à 1 850 °C, stables à cette température en atmosphère réductrice, à porosité ouverte inférieure à 15 % et module de rupture supérieur à 200 bars à 1 500 °C.

L'invention fournit donc un réfractaire pour haute température, de composition comprenant plus de 95 % d'oxyde d'aluminium et de ses composés nitrurés et carbonés et moins de 1 % dioxyde de silicium, et constitué essentiellement de grains d'oxyde d'aluminium de taille comprise entre 0,1 et 5 mm environ, plus de la moitié des grains étant plus gros que 0,2 mm maintenus par un liant, qui présente la particularité que le liant est constitué d'une association de nitrure d'aluminium, de carbure d'aluminium et d'oxyde d'aluminium pour former un composé du type oxycarbo-nitrure d'aluminium. L'association de ces trois composés permet d'obtenir des réfractaires améliorés et présentant des propriétés supérieures à celles de leurs constituants en ce qui concerne la résistance mécanique à chaud, point faible de l'oxyde d'aluminium, la résistance à l'hydratation, point faible du carbure d'aluminium et la tenue aux brusques variations de température, point faible du nitrure d'aluminium.

L'invention fournit également un procédé d'obtention de matière réfractaire, qui comporte les étapes suivantes :

1°) Préparation d'un mélange comprenant :

a) 50 à 80 % de grains de corindon électro-fondu ou fritté dans des granulométries allant de 0,1 à 5 mm, avec au moins la moitié en poids des grains plus gros que 0,2 mm, formant l'ossature de la brique,

b) 20 à 50 % de constituants du liant final s'analysant comme suit :

2

— 5 à 20 % d'alumine ultra-fine < 100 micromètres,

— 5 à 20 % de poudre d'aluminium < 200 micromètres,

— 0,5 à 5 % de carbone provenant soit d'un résidu d'agglomérant, soit de noir de fumée ou d'un mélange des deux, soit encore de graphite microcristallin; cette quantité de carbone étant réduite éventuellement d'une quantité égale à celle du carbone résultant de la décomposition du liquide de malaxage,

— 0,5 à 4 % d'un catalyseur de nitruration et de carburation provenant de la famille des oxydes de fer, de titane, de chaux ou de magnésie, toutes les quantités ci-dessus étant données en poids et rapportées au poids total du mélange,

2°) Malaxage avec une quantié convenable de liquide puis mise en forme par pressage sous une pression minimale de 600 bars et de préférence à environ 1 000 bars.

3°) Cuisson jusqu'au moins 1 250 °C, et de préférence vers 1 500 °C sous atmosphère réductrice contenant de l'azote ou en azote pur.

La transformation du liant provisoire en liant définitif, se fait en deux temps, après la disparition du ou des liquides :

A partir de 700 °C et jusqu'à 1 200 °C, on observe le phénomène de nitruration de l'aluminium avec formation d'AlN. Cette réaction qui s'effectue avec gain de poids et de volume se ralentit par manque d'azote disponible dans la masse, de sorte que, pour obtenir une brique dense à faible porosité et mécaniquement résistante on fait appel, selon l'invention, à une autre réaction donnant un liant réfractaire et dont les constituants sont déjà en place.

Cette réaction est la formation d'un oxycarbure d'aluminium qui intervient entre l'aluminium résiduel, l'alumine ultra-fine et le carbone très réactif introduit intentionnellement à cet effet. C'est donc l'association de ces deux liants : AlN déjà formé et oxy-carbure stables tous les deux au-delà de 1 850 °C qui est à l'origine des propriétés remarquables de ce nouveau réfractaire.

Il ne s'oxyde que très lentement en profondeur car il donne alors naissance à une couche d'alumine alpha très étanche qui ne s'écaille pas de la brique ni ne la fait gonfler.

Par sa stabilité thermique, ce liant complexe est particulièrement résistant aux laitiers sidérurgiques mêmes riches en chaux et en oxyde de fer, ce qui rend cette brique de corindon particulièrement apte pour le garnissage d'appareils sidérurgiques du type H. F., poches de coulée, busettes de coulée continue, ainsi que des réacteurs de gazéification de charbon à cendres liquides. On observe que la cuisson du produit se fait pratiquement sans variation de volume, contrairement à ce qui se passe pour le frittage de poudre d'alumine. Cela permet une bonne précision sur les dimensions finales du produit.

L'invention va être illustrée par les exemples suivants, donnés à titre non limitatif.

## Exemple 1

On a malaxé ensemble un mélange composé de :

| | |
|---|---|
| corindon noir 5-2 mm | 30 % |
| corindon noir 2-0,2 mm | 30 % |
| corindon noir 0-0,2 mm | 5 % |
| alumine (fines) < 50 micromètres | 15 % |
| aluminium < 74 micromètres | 15 % |

avec 5 % de résine phénolique servant de liant provisoire et d'apport de carbone.

L'analyse chimique des matières premières solides étant la suivante :

| | Corindon noir | Alumine | Aluminium |
|---|---|---|---|
| $Al_2O_3$ | 96,25 | 99,45 | – |
| $Al$ | | | 99,30 |
| $SiO_2$ | 0,75 | 0,10 | 0,25 |
| $TiO_2$ | 2,45 | 0,05 | – |
| $Fe_2O_3$ | 0,15 | 0,05 | 0,40 |
| $CaO$ | 0,10 | 0,01 | – |
| $MgO$ | 0,10 | 0,01 | 0,05 |
| $Na_2O$ | 0,10 | 0,32 | – |
| $K_2O$ | 0,10 | 0,01 | – |
| | 100,00 | 100,00 | 100,00 |

Le $TiO_2$ qui joue le rôle de catalyseur, est introduit par le corindon noir.

On a pressé le mélange de poudres et de résine sous une pression de 1 000 bars pour former des briques, qui ont été cuites à 1 400 °C sous azote.

**0 168 295**

Le résultat des mesures et examens faits sur ces briques a été le suivant :

| | |
|---|---|
| Densité apparente | 3,05 g/cm³ |
| Porosité ouverte | 10 % |
| Résistance à la compression à 20 °C | 1 500 bars |
| Module de rupture à 20 °C | 280 bars |
| Module de rupture à 1 500 °C | 230 bars |

Variation de poids lors d'un traitement d'une heure à 1 850 °C en atmosphère de CO < 1 % par heure.

### Exemple 2

On a malaxé ensemble un mélange composé de :

| | |
|---|---|
| corindon noir 5-2 mm | 30 % |
| corindon noir 2-0,2 mm | 30 % |
| alumine 50 micromètres | 20 % |
| aluminium 74 micromètres | 12 % |
| carbon black | 3 % |

avec un liant provisoire formé de 1 % d'AVEBENE et de 4 % de furfural. L'Avebene (marque déposée) est un mélange de lignine et de sulfates et sulfites de lignine.

L'analyse chimique des matières premières solides était la suivante :

| | Corindon noir | Alumine | Aluminium |
|---|---|---|---|
| $Al_2O_3$ | 96,25 | 99,45 | – |
| Al | | | 99,30 |
| $SiO_2$ | 0,75 | 0,10 | 0,25 |
| $TiO_2$ | 2,45 | 0,05 | – |
| $Fe_2O_3$ | 0,15 | 0,05 | 0,40 |
| CaO | 0,10 | 0,01 | – |
| MgO | 0,10 | 0,01 | 0,05 |
| $Na_2O$ | 0,10 | 0,32 | – |
| $K_2O$ | 0,10 | 0,01 | – |
| | 100,00 | 100,00 | 100,00 |

Le $TiO_2$ jouant le rôle de catalyseur est incorporé dans le corindon noir.

On a opéré comme dans l'exemple 1 et le résultat des mesures et examens faits sur la brique a été le suivant :

| | |
|---|---|
| Densité apparente | 2,90 g/cm³ |
| Porosité ouverte | 12 % |
| Résistance à la compression à 20 °C | 1 800 bars |
| Module de rupture à 20 °C | 250 bars |
| Module de rupture à 1 500 °C | 210 bars |

Variation de poids lors d'un traitement de poids lors d'un traitement d'une heure à 1 850 °C en atmosphère de CO : < 1 %.

### Exemple 3

On a malaxé ensemble un mélange composé de :

| | |
|---|---|
| alumine tabulaire 1,17-2,38 mm | 30 % |
| alumine tabulaire 0,52-1,17 mm | 30 % |
| alumine < 50 micromètres | 19 % |
| aluminium < 74 micromètres | 12 % |
| oxyde de fer | 1 % |
| graphite microcristallin | 3 % |

avec 5 % de résine phénolique servant de liant provisoire et d'apport de carbone.

L'analyse chimique des matières premières solides était la suivante :

4

| | Alumine tabulaire | Alumine | Aluminium | Oxyde de fer |
|---|---|---|---|---|
| $Al_2O_3$ | 99,39 | 99,45 | - | - |
| $Al$ | - | - | 99,30 | - |
| $SiO_2$ | 0,04 | 0,10 | 0,25 | 0,2 |
| $TiO_2$ | 0,05 | 0,05 | - | - |
| $Fe_2O_3$ | 0,02 | 0,05 | 0,40 | 99,7 |
| $CaO$ | 0,05 | 0,01 | - | - |
| $MgO$ | 0,05 | 0,01 | 0,05 | - |
| $Na_2O$ | 0,30 | 0,32 | - | 0,1 |
| $K_2O$ | 0,10 | 0,01 | - | - |
| | 100,00 | 100,00 | 100,00 | 100,00 |

On a opéré comme dans l'exemple 1 et le résultat des mesures et examens faits sur la brique a été le suivant :

| | |
|---|---|
| Densité apparente | 2,75 g/cm³ |
| Porosité ouverte | 14 % |
| Résistance à la compression à 20 °C | 1 200 bars |
| Module de rupture à 20 °C | 240 bars |
| Module de rupture à 1 500 °C | 220 bars |

Variation de poids lors d'un traitement d'une heure à 1 850 °C en atmosphère de CO : < 1 %.

**Revendications**

1. Matériau réfractaire pour haute température, constitué essentiellement de grains d'oxyde d'aluminium de taille comprise entre 0,1 et 5 mm environ, plus de la moitié des grains étant plus gros que 0,2 mm, maintenus par un liant consistant essentiellement de nitrure d'aluminium, de carbure d'aluminium et d'oxyde d'aluminium, associés ensemble pour constituer un composé du type oxy-carbonitrure d'aluminium, ledit matériau réfractaire contenant au total plus de 95 % d'oxyde d'aluminium et moins de 1 % d'oxyde de silicium.

2. Matériau réfractaire pour haute température selon la revendication 1, caractérisé en ce qu'il a un point de fusion supérieur à 1 850 °C, est stable à cette température en atmosphère réductrice, a une porosité ouverte inférieure à 15 % et un module de rupture supérieur à 20 MPa (200 bars) à 1 500 °C.

3. Procédé d'obtention d'un matériau réfractaire selon la revendication 1, caractérisé en ce qu'il comporte les étapes suivantes :

1°) Préparation d'un mélange comprenant :

a) 50 à 80 % de grains de corindon électrofondu ou fritté dans des granulométries allant de 0,1 à 5 mm avec au moins la moitié en poids des grains plus gros que 0,2 mm,

b) 20 à 50 % de constituants du liant final s'analysant comme suit :
— 5 à 20 % d'alumine ultra-fine < 100 micromètres,
— 5 à 20 % de poudre d'aluminium < 200 micromètres,
— 0,5 à 5 % de carbone provenant soit d'un résidu d'agglomérant, soit de noir de fumée ou d'un mélange des deux, soit encore de graphite microcristallin, cette quantité de carbone étant réduite éventuellement d'une quantité égale à celle du carbone résultant de la décomposition du liquide de malaxage,
— 0,5 à 4 % d'un catalyseur de nitruration et de carburation de la famille des oxydes de fer, de titane, de chaux ou de magnésie,
toutes les quantités ci-dessus étant données en poids, et rapportées au poids total du mélange.

2°) Malaxage avec une quantité convenable de liquide puis mise en forme par pressage à une pression minimale de 60 MPa (600 bars), et de préférence à une pression de 100 MPa (1 000 bars) environ.

3°) Cuisson à une température minimale de 1 250 °C et de préférence à 1 500 °C environ, sous atmosphère réductrice en présence d'azote ou sous atmosphère d'azote pur.

4. Procédé selon la revendication 3, caractérisé en ce que le liquide de malaxage est une résine organique qui se décompose en fournissant la totalité du carbone nécessaire à la formation de carbure d'aluminium.

5. Procédé selon la revendication 4, caractérisé en ce que le liquide de malaxage contient une résine phénolique ou furfurylique.

5

**0 168 295**

Claims

1. Refractory material for use at high temperature, consisting essentially of aluminium oxide particles approximately between 0.1 and 5 mm in size, more than one halft of the particles being larger than 0.2 mm, held by a binder consisting essentially of aluminium nitride, aluminium carbide and aluminium oxide which are combined together to form a compound of the aluminium oxycarbonitride type, the said refractory material containing a total of over 95 % of aluminium oxide and less than 1 % of silicon oxide.

2. Refractory material for use at high temperature according to Claim 1, characterized in that it has a melting point above 1 850 °C, is stable at this temperature in a reducing atmosphere, has an open porosity of less than 15 % and a modulus of rupture greater than 20 MPa (200 bars) at 1 500 °C.

3. Process for producing a refractory material according to Claim 1, characterized in that it incorporates the following steps :

1) Preparation of a mixture comprising :

a) 50 to 80 % of particles of electrofused or sintered corundum with particle size distributions ranging from 0.1 to 5 mm with at least one half by weight of the particles larger than 0.2 mm,

b) 20 % to 50 % of the components of the final binder analysing as follows :
— 5 to 20 % of ultrafine alumina < 100 micrometers,
— 5 to 20 % of alumina powder < 200 micrometers,
— 0.5 to 5 % of carbon originating either from a binder residue, or from lampblack or from a mixture of both, or alternatively from microcrystalline graphite, this quantity of carbon being reduced, if appropriate, by a quantity equal to that of the carbon produced by the decomposition of the milling liquid,
— 0.5 to 4 % of a catalyst for nitriding and for carbiding from the group of iron and titanium oxides, lime or magnesia,
all the above quantities being given by weight and relative to the total weight of the mixture.

2) Milling with a suitable quantity of liquid and then shaping by pressing at a minimum pressure of 60 MPa (600 bars), and preferably at a pressure of approximately 100 MPa (1 000 bars).

3) Firing at a minimum temperature of 1 250 °C and preferably at approximately 1 500 °C, in a reducing atmosphere in the presence of nitrogen or in an atmosphere of pure nitrogen.

4. Process according to Claim 3, characterized in that the milling liquid is an organic resin which decomposes, providing the totality of the carbon required for the formation of aluminium carbide.

5. Process according to Claim 4, characterized in that the milling liquid contains a phenolic or furfuryl resin.

Patentansprüche

1. Hitzebeständiges Material für hohe Temperatur, im wesentlichen bestehend aus Körnern von Aluminiumoxid einer Größe zwischen etwa 0,1 und 5 mm, wobei mehr als die Hälfte der Körner größer als 0,2 mm ist und die Körner von einem Bindemittel zusammengehalten werden, das im wesentlichen aus Aluminiumnitrid, Aluminiumkarbide und Aluminiumoxid besteht, und miteinander verbunden sind, um eine Verbindung vom Aluminiumoxykarbonitridtyp zu bilden, wobei dieses hitzebeständige Material im ganzen mehr als 95 % Aluminiumoxid und weniger als 1 % Siliciumoxid enthält.

2. Hitzebeständiges Material für hohe Temperatur nach Anspruch 1, dadurch gekennzeichnet, daß es einen Schmelzpunkt oberhalb 1 850 °C hat, bei dieser Temperatur in einer reduzierenden Atmosphäre beständig ist, eine offene Porosität von weniger als 15 % und einen Bruchmodul oberhalb 20 MPa (200 bar) bei 1 500 °C hat.

3. Verfahren zur Herstellung eines hitzebeständigen Materials nach Anspruch 1, dadurch gekennzeichnet, daß man folgende Stufen ausführt :

1°) Herstellung eines Gemisches aus :

a) 50 bis 80 % von Körnern von elektrisch geschmolzenem oder gesintertem Korund mit einer Korngrößenverteilung, die von 0,1 bis 5 mm mit weniger als der Hälfte des Gewichtes der Körner größer als 0,2 mm geht,

b) 20 bis 50 % Bestandteilen des endgültigen Bindemittels, dessen Analyse folgendermaßen ist :
— 5 bis 20 % ultrafeines Aluminiumoxid von < 100 µm,
— 5 bis 20 % Aluminiumpulver von < 200 µm,
— 0,5 bis 5 % Kohlenstoff, der aus einem Bindemittelrückstand, Gasruß oder einem Gemisch derselben oder überdies aus mikrokristallinem Graphit stammt, wobei diese Kohlenstoffmenge gegebenenfalls um eine Menge reduziert ist, die gleich jener des Kohlenstoffes ist, die aus der Zersetzung der Mischungsflüssigkeit resultiert, und
— 0,5 bis 4 % eines Nitrier- und Karburierkatalysators der Familie der Eisen- und Titanoxide, Calcium- oder Magnesiumoxid,
wobei die obigen Mengen in Gewichtsprozenten angegeben sind und sich auf das Gesamtgewicht des Gemisches beziehen,

2°) Vermischen mit einer passenden Flüssigkeitsmenge und anschließende Formung durch Verpressen bei einem Mindestdruck von 60 MPa (600 bar), vorzugsweise bei einem Druck von etwa 100 MPa (1 000 bar),

3°) Brennen bei einer Mindesttemperatur von 1 250 °C und vorzugsweise von etwa 1 500 °C unter einer reduzierenden Atmosphäre in Gegenwart von Stickstoff oder unter einer reinen Stickstoffatmosphäre.

4. Verfahren nach Anspruch 3, dadurch gekennzeichnet, daß die Mischungsflüssigkeit ein organisches Harz ist, das sich unter Lieferung des gesamten für die Bildung des Aluminiumkarbids erforderlichen Kohlenstoffs zersetzt.

5. Verfahren nach Anspruch 4, dadurch gekennzeichnet, daß die Mischungsflüssigkeit ein phenol- oder furfurylharz enthält.